# FASCICULE DE BREVET EUROPEEN

(11) **EP 2 239 860 B1**
(45) Date de publication et mention de la délivrance du brevet: **15.08.2012**
(21) Numéro de dépôt: 09157506.8
(22) Date de dépôt: 07.04.2009
(51) Int. Cl.: H04B 1/40, H04L 27/152

(54) **RÉCEPTEUR DE SIGNAUX À MODULATION FSK À GRANDE SENSBILITÉ À FAIBLE DÉBIT**
SIGNALEMPFÄNGER MIT FSK-MODULATION GROßER SENSIBILITÄT MIT GERINGEM DURCHSATZ
HIGH-SENSITIVITY, LOW-RATE FSK MODULATION SIGNAL RECEIVER

(43) Date de publication de la demande: 13.10.2010
(73) Titulaire: The Swatch Group Research and Development Ltd., 2074 Marin (CH)
(72) Inventeur: Casagrande, Arnaud, 2014, Bôle (CH); Velasquez, Carlos, 2000, Neuchâtel (CH); Zellweger, Emil, 4514, Lommiswil (CH)
(74) Mandataire: Surmely, Gérard

(56) Documents cités:
- EP-A- 1 207 627
- EP-A- 1 791 311
- FR-A- 2 711 293
- US-A- 4 628 518

## Description

L'invention concerne un récepteur de signaux à modulation FSK ayant une grande sensibilité dans un mode à faible débit.

Habituellement pour la transmission ou réception de données ou commandes à courte distance, un émetteur ou récepteur utilise une modulation du type FSK (Frequency Shift Keying en terminologie anglaise). Si la fréquence porteuse RF est élevée, par exemple supérieure à 300 MHz, une largeur de bande assez élevée est choisie pour la fréquence intermédiaire, notamment supérieure ou égale à 100 kHz. La déviation de fréquence de modulation dans les signaux modulés peut être adaptée en fonction de cette largeur de bande. Dans ce cas de figure, il peut être utilisé une référence de fréquence fournie par un oscillateur local, qui n'est pas très précise et donc bon marché. Cependant il doit être tenu compte de la puissance du bruit thermique, qui est proportionnelle à cette largeur de bande choisie. Ainsi un système de transmission ou réception à large bande n'a en général pas une excellente sensibilité.

Dans le document de brevet FR 2 711 293, il est décrit un récepteur de signaux radiofréquences, dont la largeur de bande peut être adaptée. Ce récepteur du type superhétérodyne est capable de démoduler des signaux modulés en fréquence à large bande, ainsi que des signaux à bande étroite. La largeur de bande peut être variée dynamiquement pour obtenir le meilleur compromis entre l'atténuation de la distorsion et l'atténuation du bruit. Après une première conversion de fréquence, un filtre permet de filtrer les signaux intermédiaires avec une première largeur de bande (large bande). Par la suite, un autre filtrage est effectué sur les signaux intermédiaires au moyen d'une seconde largeur de bande et d'une troisième largeur de bande de filtre pour une bande étroite. Finalement, une démodulation est opérée par un discriminateur.

Aucune configuration spécifique du récepteur n'est par contre opérée dans ce récepteur en fonction du débit de données modulées des signaux de données captés. De ce fait, la variation dynamique de la largeur de bande permet d'obtenir un bon compromis entre l'atténuation de la distorsion et l'atténuation du bruit des signaux captés. Le récepteur de ce document de brevet est également de structure relativement compliquée, ce qui ne permet pas de réduire suffisamment sa consommation électrique pour un montage dans un objet portable de petite taille.

L'invention a donc pour but de fournir un récepteur de signaux à modulation FSK capable de pouvoir fonctionner avec une grande sensibilité et facilement configurable en fonction du débit de données ou commandes modulées dans les signaux modulés tout en palliant les inconvénients susmentionnés de l'état de la technique.

A cet effet, l'invention concerne un récepteur de signaux à modulation FSK, qui comprend les caractéristiques mentionnées dans la revendication indépendante 1.

Des formes d'exécution particulières du récepteur sont définies dans les revendications dépendantes 2 à 7.

Un avantage d'un tel récepteur de signaux à modulation FSK selon l'invention réside dans le fait qu'il peut être configuré aussi bien pour la réception de signaux de données ou commandes modulées dans un mode à moyen ou haut débit, que pour la réception de signaux de données ou commandes modulées dans un mode à faible débit. De préférence, le récepteur est configuré dans le mode à faible débit, car l'opération de démodulation des données et commandes est facilitée avec une grande sensibilité dudit récepteur. Pour ce faire, l'unité de filtrage est commandée pour filtrer les signaux intermédiaires dans un filtre poly-phase pour un premier étage de démodulation à moyen ou haut débit, ou pour filtrer les signaux intermédiaires en bande de base dans deux filtres passe-bas découplés dans le filtre poly-phase pour un second étage de démodulation à faible débit.

Avantageusement dans le mode à faible débit, les signaux captés par l'antenne sont convertis directement par les mélangeurs en des signaux intermédiaires en bande de base. Ceci simplifie la démodulation des données ou commandes dans un mode à faible débit, car la démodulation peut être faite par une simple bascule du type D à la suite de filtres passe-bande à bande étroite centrée sur les fréquences de la déviation de fréquence.

Les buts, avantages et caractéristiques du récepteur de signaux à modulation FSK apparaîtront mieux dans la description suivante sur la base d'au moins une forme d'exécution non limitative illustrée par le dessin sur lequel :

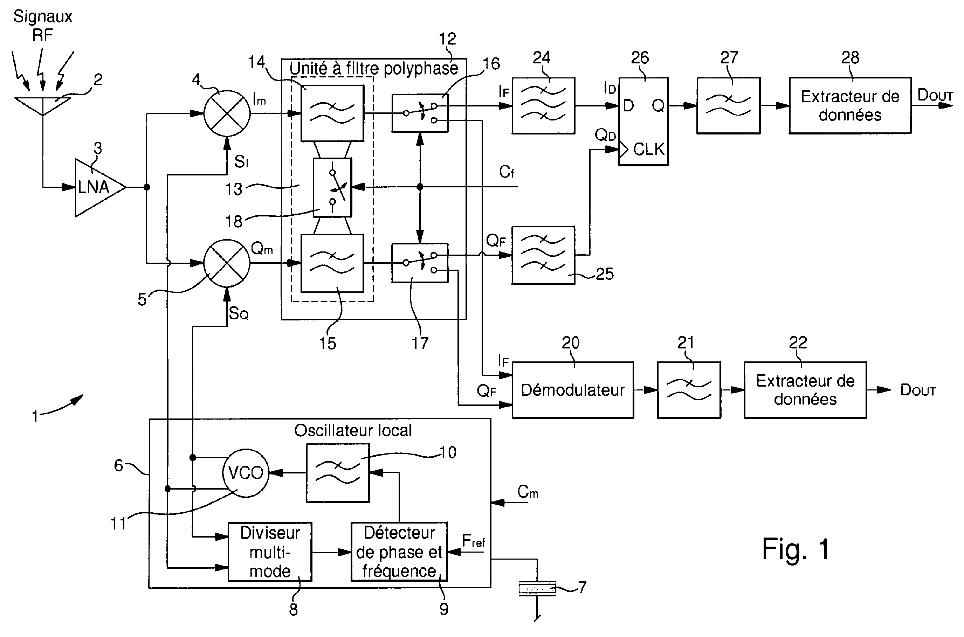

la figure 1 représente de manière simplifiée une forme d'exécution du récepteur de signaux à modulation FSK selon l'invention.

Dans la description suivante, tous les composants du récepteur de signaux à modulation de fréquence (FSK), qui sont bien connus d'un homme du métier dans ce domaine technique, ne sont décrits que de manière simplifiée. Ledit récepteur de signaux à modulation FSK peut avantageusement être utilisé par exemple dans des systèmes de commande à distance de véhicules ou des systèmes de comptage.

Le récepteur de signaux à modulation FSK 1 représenté à la figure 1 permet d'être configuré pour pouvoir fonctionner soit dans un mode de réception de données ou commandes à moyen ou haut débit supérieur ou égal à 100 kbits/s, soit avantageusement dans un mode de réception de données ou commandes à faible débit à grande sensibilité. Dans le cas d'une configuration préférée en mode à faible débit de données ou commandes modulées inférieur à 10 kbits/s, par exemple de l'ordre de 1 kbits/s, la puissance des signaux captés est généralement concentrée au niveau de la déviation de fréquence de modulation Δf (positive et négative) par rapport à la fréquence porteuse f₀ des signaux. Généralement dans la modulation de fréquence des signaux captés, un état "1" de modulation est défini par l'addition de la fréquence porteuse f₀ et de la déviation de fréquence de modulation Δf, ce qui donne f₀+Δf, alors qu'un état "0" de modulation est défini par la déviation de fréquence de modulation Δf soustraite de la fréquence porteuse f₀, ce qui donne f₀-Δf. Bien entendu, il pourrait être imaginé également que l'état "0" de modulation soit défini comme la fréquence porteuse f₀ même si la modulation de données à f₀+Δf et f₀-Δf est préférée.

Le récepteur de signaux à modulation FSK 1 comprend une antenne 2 de réception à courte distance de signaux RF, dont la fréquence porteuse peut être supérieure ou égale à 300 MHz. Les signaux RF à modulation FSK captés par l'antenne 2 sont amplifiés dans un amplificateur à faible bruit LNA 3. Cet amplificateur à faible bruit LNA 3 peut comprendre également un filtre passe-bande non représenté. Les signaux RF amplifiés et filtrés sont convertis en fréquence dans un premier mélangeur 4 par des signaux en phase Sₗ fournis par l'oscillateur local 6 afin de fournir des signaux intermédiaires en phase Iₘ. Ces signaux RF sont également convertis en fréquence dans un second mélangeur 5 par des signaux en quadrature S_{Q} fournis par l'oscillateur local 6 afin de fournir des signaux intermédiaires en quadrature Qₘ. Le premier mélangeur 4 et le second mélangeur 5 font partie d'un bloc mélangeur du récepteur.

Le récepteur de signaux à modulation FSK 1 comprend un circuit intégré dans lequel la majeure partie des composants du récepteur est intégrée. Ce circuit intégré peut être réalisé dans une technologie CMOS à 0.18 µm par exemple.

Le récepteur de signaux à modulation FSK comprend encore à la suite des mélangeurs 4 et 5, une unité à filtre poly-phase 12, qui peut être configurée sous la forme de filtres passe-bas 14 et 15 pour filtrer les signaux intermédiaires dans un mode à faible débit, ou sous la forme d'un filtre poly-phase ou passe-bande 13 pour filtrer les signaux intermédiaires dans un mode à moyen ou haut débit. Le récepteur 1 comprend à la suite de l'unité de filtrage 12, un premier étage de démodulation à moyen ou haut débit recevant les signaux intermédiaires filtrés dans un mode à moyen ou haut débit, et un second étage de démodulation à faible débit recevant les signaux intermédiaires filtrés dans un mode à faible débit.

Dans le second étage de démodulation, le récepteur 1 comprend deux filtres passe-bande 24 et 25 à bande étroite. Ces filtres passe-bande sont centrés sur les fréquences de modulation, notamment autour de la déviation de fréquence +Δf et -Δf, pour filtrer les signaux intermédiaires filtrés I_{F} et Q_{F} dans un mode à faible débit. A la suite des filtres passe-bande 24 et 25 sont disposés une bascule du type D 26 pour démoduler les données ou commandes, un filtre passe-bas 27 et un extracteur de données 28 pour fournir les données ou commandes D_{OUT}. Dans le premier étage de démodulation lors de la sélection du mode à moyen ou haut débit, le récepteur 1 comprend en outre un démodulateur 20 des données ou commandes contenues dans les signaux intermédiaires filtrés I_{F} et Q_{F}, suivi par un filtre passe-bas 21 et un extracteur de données 22 pour fournir les données ou commandes D_{OUT}.

Dans le cas d'un mode de réception à moyen ou haut débit sélectionné, les signaux intermédiaires Iₘ et Qₘ convertis en fréquence sont encore à une fréquence qui peut être par exemple de l'ordre de 1 MHz, avec une déviation de fréquence de modulation Δf, qui peut être de l'ordre de 250 kHz ou inférieure par rapport à la fréquence porteuse convertie de 1 MHz. Par contre dans le cas d'un mode de réception à faible débit, les signaux intermédiaires Iₘ et Qₘ sont convertis directement en bande de base à 0 Hz étant donné que la puissance des signaux captés est concentrée au niveau de chaque déviation de fréquence de modulation Δf. Bien entendu une conversion en fréquence directement en bande de base pour la réception de signaux à modulation FSK à moyen ou haut débit ne peut en règle générale pas être envisagée, car il y a beaucoup d'énergie des signaux utiles et du bruit sur toute la largeur de bande de fréquences. Une perte d'information pourrait être constatée si une conversion directe en bande de base à 0 Hz était opérée.

L'oscillateur local 6 du récepteur comprend principalement une boucle à verrouillage de phase et fréquence, qui comprend un oscillateur commandé en tension VCO 11. L'oscillateur commandé en tension VCO peut être un oscillateur du type différentiel afin de fournir les deux signaux à haute fréquence en phase S_{I} et en quadrature S_{Q}. Ces signaux en phase et en quadrature sont fournis dans la boucle à verrouillage de phase et fréquence à un diviseur multi-mode 8. La fréquence divisée du diviseur 8 est comparée dans un détecteur de phase et fréquence 9 à une fréquence de référence Fref provenant d'un oscillateur à quartz 7. Le signal de sortie du détecteur de phase et fréquence 9 est filtré dans un filtre passe-bas 10 avant de commander de manière connue l'oscillateur commandé en tension VCO.

Dans le cas où l'oscillateur local 6 comprend un résonateur à quartz 7 précis, il est possible de réaliser un récepteur de signaux à modulation FSK à grande sensibilité notamment dans un mode à faible débit (1 kbit/s), principalement inférieur à 10 kbits/s. Pour un tel débit, toute la puissance dans les signaux captés est concentrée au niveau de la déviation de fréquence par rapport à la fréquence porteuse f₀ à savoir à f₀+Δf et f₀-Δf. Pour ce mode de fonctionnement, un quartz précis est nécessaire. De ce fait, il est possible d'opérer comme indiqué ci-devant une conversion en fréquence des signaux RF captés pour obtenir des signaux intermédiaires en phase Iₘ et en quadrature Qₘ directement en bande de base. Par contre pour un récepteur de signaux à modulation FSK à moyen ou haut débit, le résonateur à quartz 7 n'a pas besoin d'être précis étant donné que la puissance des signaux captés avec le bruit est sensiblement similaire sur toute la largeur de bande du récepteur. Plus la largeur de bande est grande, plus le bruit thermique est également grand, ce qui nécessite souvent de trouver un bon compromis entre largeur de bande et bruit thermique pour démoduler sans trop de problèmes les données des signaux captés à modulation FSK.

La configuration du récepteur 1 en mode à moyen ou haut débit ou en mode à faible débit pour la conversion de fréquence peut être effectuée au moyen d'un signal de commande Cm fourni à l'oscillateur local 6. Ce signal de commande Cm permet à l'oscillateur commandé en tension VCO 11 de fournir des signaux en phase S_{I} et en quadrature S_{Q} ayant une fréquence différente entre le mode à moyen ou haut débit et le mode à faible débit. Ce signal de commande Cm peut agir sur le diviseur multi-mode 8 ou éventuellement sur la fréquence de référence Fref de l'oscillateur à quartz 7. Dans le mode à faible débit par exemple, la fréquence précise des signaux en phase S_{I} et en quadrature S_{Q} est identique à la fréquence porteuse f₀ des signaux RF captés par l'antenne 2. Ceci permet d'opérer une conversion directe en bande de base des signaux RF captés par le premier mélangeur 4 et le second mélangeur 5. Par contre dans le mode à moyen ou haut débit, la fréquence des signaux en phase S_{I} et en quadrature S_{Q} est inférieure par exemple de 1 MHz à la fréquence porteuse f₀ des signaux RF captés par l'antenne 2. Ceci permet d'obtenir des signaux intermédiaires Iₘ et Qₘ à fréquence de l'ordre de 1 MHz, qu'il faudra encore démoduler dans un démodulateur 20.

Il peut être envisagé également de configurer ou paramétrer le récepteur au terme des étapes de fabrication du circuit intégré dudit récepteur pour qu'il puisse fonctionner soit dans un mode à moyen ou haut débit, soit dans un mode à faible débit. Ainsi avec un même circuit intégré, il est possible d'utiliser le récepteur de signaux à modulation FSK soit à moyen ou haut débit, soit à faible débit selon la configuration fixée.

Le récepteur de signaux à modulation FSK 1 comprend comme indiqué ci-devant, encore une unité de filtrage à filtre poly-phase 12 pour filtrer les deux signaux intermédiaires Iₘ et Qₘ. Cette unité à filtre poly-phase 12 comprend essentiellement un filtre poly-phase 13, qui est composé de deux filtres passe-bas 14 et 15 couplés, dont le premier filtre passe-bas 14 reçoit les signaux intermédiaires en phase Iₘ, alors que le second filtre passe-bas 15 reçoit les signaux intermédiaires en quadrature Qₘ. Lorsqu'il y a couplage entre les deux filtres passe-bas 14 et 15 par l'intermédiaire d'un élément interrupteur 18 commandé par un signal de commande Cf pour être fermé dans le mode à moyen ou haut débit sélectionné, le filtre poly-phase 13 permet d'opérer un filtrage passe-bande autour de la fréquence porteuse des signaux intermédiaires. La fréquence de coupure de ce filtrage passe-bande peut être définie par exemple à plus ou moins 450 kHz d'une fréquence centrale par exemple de l'ordre de 1 MHz, en fonction de la déviation de fréquence de modulation choisie (Δf). Ce filtre poly-phase peut être considéré comme un filtre passe-bas décalé en fréquence pour produire des signaux intermédiaires en phase filtrés I_{F} et des signaux intermédiaires en quadrature filtrés Q_{F}.

Il est à noter que le couplage des deux filtres passe-bas 14 et 15 par l'intermédiaire de l'élément interrupteur 18 peut être défini plutôt par des "girateurs". Cependant il est préférable de comprendre ledit couplage entre les deux filtres passe-bas au moyen d'un élément interrupteur traditionnel.

Dans le mode à moyen ou haut débit, les signaux intermédiaires filtrés I_{F} et Q_{F} sont fournis par l'intermédiaire de deux commutateurs 16 et 17, qui sont commandés par le signal de commande Cf, à un démodulateur 20 du premier étage de démodulation à moyen ou haut débit. Ce démodulateur 20 de structure connue permet d'opérer une démodulation des signaux intermédiaires filtrés I_{F} et Q_{F} dans le mode à moyen ou haut débit. Le démodulateur 20 est suivi d'un filtre passe-bas 21 pour supprimer toutes les fréquences parasites des signaux de données ou commandes fournis par le démodulateur 20. La fréquence de coupure de ce filtre passe-bas peut être ajustée en fonction du débit du signal modulé. Finalement, un extracteur de données 22 bien connu est relié en sortie du filtre passe-bas pour fournir les données ou commandes D_{OUT}.

Préférentiellement dans le mode à faible débit, le filtre poly-phase 13 est converti en deux filtres passe-bas 14 et 15 traditionnels, qui sont découplés par l'intermédiaire de l'élément interrupteur 18 dans un état ouvert commandé par le signal de commande Cf. Les signaux intermédiaires en phase Iₘ, qui sont en bande de base, sont donc filtrés par le premier filtre passe-bas 14 pour fournir des signaux intermédiaires filtrés en phase I_{F} à un premier filtre passe-bande 24 du second étage de démodulation à faible débit. Ce premier filtre passe-bande 24 est à bande étroite centrée sur chaque déviation de fréquence Δf ou -Δf. La déviation de fréquence à -Δf est uniquement une déviation de fréquence Δf à phase inversée, ce qui facilite une démodulation par une simple bascule du type D 26 expliquée ci-après. Les signaux intermédiaires en quadrature Qₘ, qui sont en bande de base, sont filtrés par le second filtre passe-bas 15 pour fournir des signaux intermédiaires filtrés en quadrature Q_{F} à un second filtre passe-bande 25. Ce second filtre passe-bande est également à bande étroite centrée sur chaque déviation de fréquence Δf ou -Δf. Les signaux intermédiaires filtrés I_{F} et Q_{F} sont fournis respectivement au premier filtre passe-bande 24 et au second filtre passe-bande 25 par l'intermédiaire respectivement des commutateurs 16 et 17 commandés par le signal de commande Cf dans le mode à faible débit.

Les signaux intermédiaires de données en phase I_{D} fournis par le premier filtre passe-bande 24 sont reliés à l'entrée D d'une bascule du type D 26, alors que les signaux intermédiaires de données en quadrature Q_{D} fournis par le second filtre passe-bande 25 sont reliés à l'entrée de cadencement CLK de ladite bascule 26. De cette manière, il est facile de pouvoir opérer une démodulation des données ou commandes des signaux intermédiaires en bande de base uniquement au moyen de cette bascule du type D 26. Bien entendu, il aurait pu être imaginé de fournir les signaux intermédiaires de données en quadrature à l'entrée D de ladite bascule et les signaux intermédiaires de données en phase à l'entrée de cadencement CLK. Finalement les signaux en sortie Q de ladite bascule 26 sont encore filtrés par un filtre passe-bas 27 ayant une basse fréquence de coupure, ajustée en fonction du débit du signal modulé, avant d'entrer dans un extracteur de données 28 pour fournir les données ou commandes D_{OUT}.

On comprend de ce qui précède que le récepteur de signaux à modulation FSK est principalement amélioré des récepteurs de l'état de la technique, en ce qu'il permet facilement d'avoir une grande sensibilité et une démodulation facilitée lorsqu'il est configuré pour la réception de signaux de données ou commandes dans un mode à faible débit. Comme la puissance des signaux de données est principalement concentrée au niveau de la déviation de fréquence de modulation, un filtre passe-bande à bande étroite peut être utilisé pour filtrer les signaux intermédiaires en bande de base, ce qui facilite la démodulation des données.

A partir de la description qui vient d'être faite, plusieurs variantes du récepteur de signaux à modulation FSK peuvent être conçues par l'homme du métier sans sortir du cadre de l'invention définie par les revendications. Dans un même ordre d'idée, le récepteur aurait pu être configuré également de manière à permettre une transmission de signaux de données modulées par une même antenne dans un mode à moyen ou haut débit ou dans un mode à faible débit.

## Revendications

1. Récepteur (1) de signaux à modulation du type FSK, ledit récepteur basse puissance comprenant :
- une antenne (2) de réception de signaux de données ou de commandes modulées,
- au moins un amplificateur à faible bruit (3) pour amplifier et filtrer les signaux captés par l'antenne,
- un oscillateur local (6) à résonateur à quartz, comprenant dans une boucle à verrouillage de phase et fréquence un oscillateur commandé en tension (11) pour fournir des signaux haute fréquence (S_{I}, S_{Q}),
- au moins un bloc mélangeur (4, 5) pour mélanger les signaux captés filtrés et amplifiés avec les signaux haute fréquence fournis par l'oscillateur commandé en tension afin de produire des signaux intermédiaires (Iₘ, Qₘ) dont la fréquence est égale à la différence entre la fréquence des signaux haute fréquence et une fréquence porteuse des signaux captés, et
- une unité de filtrage (12) pour filtrer les signaux intermédiaires pour au moins un étage de démodulation des données ou commandes,
**caractérisé en ce que** le récepteur peut être configuré pour la réception de signaux de données ou commandes modulées à moyen ou haut débit ou pour la réception de signaux de données ou commandes modulées à faible débit, et **en ce que** l'unité de filtrage fournit des signaux intermédiaires filtrés (I_{F}, Q_{F}) dans un filtre poly-phase (13) à un premier étage de démodulation dans un mode à moyen ou haut débit, ou des signaux intermédiaires en bande de base filtrés dans le filtre poly-phase converti en au moins un filtre passe-bas (14, 15), à un second étage de démodulation dans un mode à faible débit.

2. Récepteur (1) selon la revendication 1, **caractérisé en ce que** l'oscillateur commandé en tension (11) de l'oscillateur local (6) fournit des signaux haute fréquence en phase (S_{I}) à un premier mélangeur (4) du bloc mélangeur pour les mélanger aux signaux captés filtrés et amplifiés afin d'obtenir des signaux intermédiaires en phase (Iₘ), et des signaux haute fréquence en quadrature (S_{Q}) à un second mélangeur (5) du bloc mélangeur pour les mélanger aux signaux captés filtrés et amplifiés afin d'obtenir des signaux intermédiaires en quadrature (Qₘ), **en ce que** dans un mode à moyen ou haut débit, le filtre poly-phase (13) de l'unité de filtrage comprend deux filtres passe-bas (14, 15) couplés afin de fournir des signaux intermédiaires filtrés en phase et en quadrature (I_{F}, Q_{F}) au premier étage de démodulation, et **en ce que** dans un mode à faible débit, les deux filtres passe-bas du filtre poly-phase (13) de l'unité de filtrage sont découplés afin qu'un premier filtre passe-bas (14) fournisse des signaux intermédiaires en bande de base filtrés en phase (I_{F}) au second étage de démodulation, et afin qu'un second filtre passe-bas (15) fournisse des signaux intermédiaires en bande de base filtrés en quadrature (Q_{F}) au second étage de démodulation.

3. Récepteur (1) selon l'une des revendications précédentes, **caractérisé en ce que** l'oscillateur commandé en tension (11) de l'oscillateur local (6) à résonateur à quartz est configuré dans un mode à moyen ou haut débit pour fournir des signaux haute fréquence en phase et en quadrature (S_{I}, S_{Q}) à une première fréquence inférieure ou supérieure à une fréquence porteuse des signaux captés filtrés et amplifiés pour que les signaux intermédiaires en phase et en quadrature (I_{F}, Q_{F}) soient à une fréquence intermédiaire correspondant à la différence entre la fréquence des signaux haute fréquence et la fréquence porteuse, et **en ce que** l'oscillateur commandé en tension (11) est configuré dans un mode à faible débit pour fournir des signaux haute fréquence en phase et en quadrature (S_{I}, S_{Q}) à une seconde fréquence identique à la fréquence porteuse des signaux captés filtrés et amplifiés pour fournir des signaux intermédiaires en phase et en quadrature en bande de base.

4. Récepteur (1) selon l'une des revendications 2 et 3, **caractérisé en ce que** dans un mode à faible débit, le second étage de démodulation comprend un premier filtre passe-bande (24) pour filtrer les signaux intermédiaires en bande de base filtrés en phase (I_{F}) et un second filtre passe-bande (25) pour filtrer les signaux intermédiaires en bande de base filtrés en quadrature (Q_{F}), chaque filtre passe-bande étant centré sur les fréquences de modulation des données ou commandes après conversion de fréquence en bande de base des signaux intermédiaires.

5. Récepteur (1) selon la revendication 4, **caractérisé en ce que** chaque filtre passe-bande (24, 25) est à bande étroite centrée sur chaque déviation positive et négative de fréquence de modulation.

6. Récepteur (1) selon l'une des revendications 4 et 5, **caractérisé en ce que** le second étage de démodulation à faible débit comprend en outre une bascule du type D (26), un des signaux intermédiaires en bande de base filtrés par les deux filtres passe-bande (24, 25), étant fourni à l'entrée D de ladite bascule, alors que l'autre des signaux intermédiaires en bande de base est fourni à une entrée de cadencement (CLK) de ladite bascule.

7. Récepteur (1) selon la revendication 6, **caractérisé en ce que** le second étage de démodulation à faible débit comprend encore un autre filtre passe-bas (27) pour filtrer les signaux de données ou commandes fournis par la bascule du type D (26), et un extracteur de données (28) relié en sortie de l'autre filtre passe-bas.

## Claims

1. Receiver (1) for FSK modulation signals, said low power receiver including:
- an antenna (2) for receiving modulated data or control signals,
- at least one low noise amplifier (3) for amplifying and filtering the signals picked up by the antenna,
- a local oscillator (6) with a quartz resonator, including, in a phase and frequency lock loop, a voltage controlled oscillator (11) for supplying high frequency signals (S_{I}, S_{Q}),
- at least one mixer unit (4, 5) for mixing the incoming, filtered and amplified signals with the high frequency signals supplied by the voltage controlled oscillator to generate intermediate signals (Iₘ, Qₘ), whose frequency is equal to the difference between the high frequency signal frequency and a carrier frequency of the incoming signals, and
- a filtering unit (12) for filtering the intermediate signals for at least one data or control demodulation stage,
**characterized in that** the receiver can be configured for receiving modulated data or control signals at medium or high rate or for receiving modulated data or control signals at low rate, and **in that** the filtering unit supplies intermediate signals (I_{F}, Q_{F}) filtered in a polyphase filter (13) to a first demodulation stage in medium or high rate mode, or intermediate, baseband signals filtered in the polyphase filter, which is converted into at least one low-pass filter (14, 15), to a second demodulation stage in low rate mode.

2. Receiver (1) according to claim 1, **characterized in that** the voltage controlled oscillator (11) of the local oscillator (6) supplies high frequency in-phase signals (S_{I}) to a first mixer (4) of the mixer unit to mix said signals with the filtered and amplified incoming signals in order to obtain intermediate, in-phase signals (Iₘ), and high frequency in-quadrature signals (S_{Q}) to a second mixer (5) of the mixer unit, to mix said signals with the filtered and amplified incoming signals in order to obtain intermediate, in-quadrature signals (Qₘ), **in that** in medium or high rate mode, the polyphase filter (13) of the filtering unit includes two, coupled, low-pass filters (14, 15) in order to supply filtered, intermediate in-phase and in-quadrature signals (I_{F}, Q_{F}) to the first demodulation stage, and **in that** in low rate mode, the two low-pass filters of the polyphase filter (13) of the filtering unit are uncoupled so that a first low-pass filter (14) supplies filtered, intermediate, baseband, in-phase signals (I_{F}) to the second demodulation stage, and so that a second low-pass filter (15) supplies intermediate, filtered, baseband, in-quadrature signals (Q_{F}) to the second demodulation stage.

3. Receiver (1) according to any of the preceding claims, **characterized in that** the voltage controlled oscillator (11) of the local oscillator (6) with a quartz resonator is configured, in medium or high rate mode, to supply high frequency, in-phase and in-quadrature signals (S_{I}, S_{Q}) at a first frequency that is lower or higher than a carrier frequency of the filtered and amplified incoming signals, so that the intermediate, in-phase and in-quadrature signals (I_{F}, Q_{F}) are at an intermediate frequency that corresponds to the difference between the frequency of the high frequency signals and the carrier frequency, and **in that** the voltage controlled oscillator (11) is configured, in low rate mode, to supply high frequency, inphase and in-quadrature signals (S_{I}, S_{Q}) at a second frequency, identical to the carrier frequency of the filtered and amplified incoming signals, to supply intermediate, baseband, in-phase and in-quadrature signals.

4. Receiver (1) according to any of claims 2 and 3, **characterized in that** in low rate mode, the second demodulation stage includes a first band-pass filter (24) for filtering the intermediate, filtered, baseband, inphase signals (I_{F}) and a second band-pass filter (25) for filtering the intermediate, filtered, baseband, in-quadrature signals (Q_{F}), wherein each band-pass filter is centred on the data or control modulation frequencies after frequency conversion into baseband of the intermediate signals.

5. Receiver (1) according to claim 4, **characterized in that** each band-pass filter (24, 25) has a narrow band centred on each positive and negative modulation frequency shift.

6. Receiver (1) according to any of claims 4 and 5, **characterized in that** the second, low rate, demodulation stage further includes a D flip-flop (26), wherein one of the intermediate, baseband signals, filtered by the two band-pass filters (24, 25) is supplied to the D input of said flip-flop, while the other intermediate, baseband signal is supplied to a clock input (CLK) of said flip-flop.

7. Receiver (1) according to claim 6, **characterized in that** the second, low rate demodulation stage further includes another low-pass filter (27) for filtering the data or control signals supplied by the D flip-flop (26), and a data extractor (28), connected at output of the other low-pass filter.

## Patentansprüche

1. Empfänger (1) für Signale mit FSK-Modulation, wobei der Empfänger mit niedriger Leistung umfasst:
- eine Antenne (2) zum Empfangen von modulierten Daten- oder Befehlssignalen,
- wenigstens einen Verstärker (3) mit geringem Rauschen, um die von der Antenne eingefangenen Signale zu verstärken und zu filtern,
- einen Hilfsoszillator (6) mit Quarzresonator, der in einer Phasen- und Frequenzverriegelungsschleife einen spannungsgesteuerten Oszillator (11) enthält, um Hochfrequenzsignale (S_{I}, S_{Q}) zu liefern,
- wenigstens einen Mischerblock (4, 5), um die gefilterten und verstärkten eingefangenen Signale mit den Hochfrequenzsignalen, die von dem spannungsgesteuerten Oszillator geliefert werden, zu mischen, um Zwischensignale (Iₘ, Qₘ) zu erzeugen, deren Frequenz gleich der Differenz zwischen der Frequenz der Hochfrequenzsignale und einer Trägerfrequenz der eingefangenen Signale ist, und
- eine Filterungseinheit (12), um die Zwischensignale für wenigstens eine Daten- oder Befehls-Demodulationsstufe zu filtern,
**dadurch gekennzeichnet, dass** der Empfänger für den Empfang von modulierten Daten- oder Befehlssignalen mit mittlerem oder hohem Durchsatz oder für den Empfang von modulierten Daten- oder Befehlssignalen mit geringem Durchsatz konfiguriert sein kann und dass die Filterungseinheit gefilterte Zwischensignale (I_{F}, Q_{F}) in einem Mehrphasenfilter (13) mit einer ersten Demodulationsstufe in einer Betriebsart mit mittlerem oder hohem Durchsatz oder Grundband-Zwischensignale, die in dem Mehrphasenfilter, das in wenigstens ein Tiefpassfilter (14, 15) umgewandelt ist, gefiltert werden, in einer zweiten Demodulationsstufe in einer Betriebsart mit geringem Durchsatz liefert.

2. Empfänger (1) nach Anspruch 1, **dadurch gekennzeichnet, dass** der spannungsgesteuerte Oszillator (11) des Hilfsoszillators (6) Inphase-Hochfrequenzsignale (S_{I}) an einen ersten Mischer (4) des Mischerblocks liefert, um sie mit den gefilterten und verstärkten eingefangenen Signalen zu mischen, um Inphase-Zwischensignale (Iₘ) zu erhalten, und Quadratur-Hochfrequenzsignale (S_{Q}) an einen zweiten Mischer (5) des Mischerblocks liefert, um Quadratur-Zwischensignale (Qₘ) zu erhalten, dass in einer Betriebsart mit mittlerem oder hohem Durchsatz das Mehrphasenfilter (13) der Filterungseinheit zwei gekoppelte Tiefpassfilter (14, 15) umfasst, um gefilterte Inphase- und Quadratur-Zwischensignale (I_{F}, Q_{F}) an die erste Demodulationsstufe zu liefern, und dass in einer Betriebsart mit geringem Durchsatz die beiden Tiefpassfilter des Mehrphasenfilters (13) der Filterungseinheit entkoppelt sind, damit ein erstes Tiefpassfilter (14) gefilterte Inphase-Grundband-Zwischensignale (I_{F}) an die zweite Demodulationsstufe liefert und damit ein zweites Tiefpassfilter (15) gefilterte Quadratur-Grundband-Zwischensignale (Q_{F}) an die zweite Demodulationsstufe liefert.

3. Empfänger (1) nach einem der vorhergehenden Ansprüche, **dadurch gekennzeichnet, dass** der spannungsgesteuerte Oszillator (11) des Hilfsoszillators (6) mit Quarzresonator in einer Betriebsart mit mittlerem oder hohem Durchsatz konfiguriert ist, um Inphase- und Quadratur-Hochfrequenzsignale (S₁, S_{Q}) mit einer ersten Frequenz, die kleiner oder größer als eine Trägerfrequenz der gefilterten und verstärkten eingefangenen Signale ist, zu liefern, damit die Inphase- und Quadratur-Zwischensignale (I_{F}, Q_{F}) eine Zwischenfrequenz haben, die der Differenz zwischen der Frequenz der Hochfrequenzsignale und der Trägerfrequenz entspricht, und dass der spannungsgesteuerte Oszillator (11) in einer Betriebsart mit geringem Durchsatz konfiguriert ist, um Inphase- und Quadratur-Hochfrequenzsignale (S₁, S_{Q}) mit einer zweiten Frequenz zu liefern, die mit der Trägerfrequenz der gefilterten und verstärkten eingefangenen Signale übereinstimmt, um Inphase- und Quadratur-Grundband-Zwischensignale zu liefern.

4. Empfänger (1) nach einem der Ansprüche 2 und 3, **dadurch gekennzeichnet, dass** in einer Betriebsart mit geringem Durchsatz die zweite Demodulationsstufe ein erstes Bandpassfilter (24), um die gefilterten Inphase-Grundband-Zwischensignale (I_{F}) zu filtern, und ein zweites Bandpassfilter (25), um die gefilterten Quadratur-Grundband-Zwischensignale (Q_{F}) zu filtern, umfasst, wobei jedes Bandpassfilter auf die Modulationsfrequenzen der Daten oder Befehle nach der Frequenzumsetzung in das Grundband der Zwischensignale zentriert ist.

5. Empfänger (1) nach Anspruch 4, **dadurch gekennzeichnet, dass** jedes Bandpassfilter (24, 25) ein schmales Band besitzt, das auf jede positive und negative Abweichung der Modulationsfrequenz zentriert ist.

6. Empfänger (1) nach einem der Ansprüche 4 und 5, **dadurch gekennzeichnet, dass** die zweite Demodulationsstufe mit geringem Durchsatz außerdem ein D-Flipflop (26) umfasst, wobei eines der Grundband-Zwischensignale, die durch die beiden Bandpassfilter (24, 25) gefiltert werden, an den D-Eingang des Flipflops geliefert wird, während das andere der Grundband-Zwischensignale an einen Takteingang (CLK) des Flipflops geliefert wird.

7. Empfänger (1) nach Anspruch 6, **dadurch gekennzeichnet, dass** die zweite Demodulationsstufe mit geringem Durchsatz außerdem ein weiteres Tiefpassfilter (27) umfasst, um die Daten- oder Befehlssignale, die von dem D-Flipflop (26) geliefert werden, zu filtern, und einen Datenextrahierer (28) umfasst, der mit dem Ausgang des anderen Tiefpassfilters verbunden ist.
